# EUROPÄISCHE PATENTSCHRIFT

(11) **EP 3 350 472 B1**
(45) Veröffentlichungstag und Bekanntmachung des Hinweises auf die Patenterteilung: **22.04.2020**
(21) Anmeldenummer: 16763502.8
(22) Anmeldetag: 07.09.2016
(51) Int. Cl.: F16F 9/32, F16F 9/54

(54) **DÄMPFERLAGER MIT GEHÄUSE UND DECKEL**
DAMPER BEARING COMPRISING A HOUSING AND COVER
PALIER AMORTISSEUR MUNI D'UN BOÎTIER ET D'UN COUVERCLE

(30) Priorität: 15.09.2015 DE 102015217605
(43) Veröffentlichungstag der Anmeldung: 25.07.2018
(73) Patentinhaber: BASF SE, 67056 Ludwigshafen am Rhein (DE)
(72) Erfinder: WITTENBRINK, Christian, 49377 Vechta (DE); NIESTRAT, Falk Soeren, 32257 Buende (DE); DUBENHORST, Stephan, 49419 Wagenfeld (DE); ESCH, Moritz, 49076 Osnabrueck (DE)
(74) Vertreter: BASF IP Association
(86) Internationale Anmeldenummer: PCT/EP2016/071014
(87) Internationale Veröffentlichungsnummer: WO 2017/045978

(56) Entgegenhaltungen:
- EP-A1- 1 878 560
- DE-A1- 10 335 956
- DE-A1-102007 003 207
- DE-A1-102012 001 299

## Beschreibung

Die vorliegende Erfindung betrifft ein Dämpferlager umfassend ein hohles Gehäuse zur Aufnahme eines Dämpfungselements sowie einen Deckel zur Fixierung des Dämpfungselements in dem Gehäuse, wobei das Gehäuse und der Deckel aus Kunststoff gefertigt sind.

Dämpferlager werden in Automobilen innerhalb des Fahrwerks verwendet und sind allgemein bekannt. Sie werden insbesondere in Kraftfahrzeugen als schwingungsdämpfende Bauteile eingesetzt. Dabei übernehmen sie die Anbindung des Stoßdämpfers an die Karosserie und/oder an Fahrwerkskomponenten. Durch eine solche elastische Ankopplung werden Schwingungen isoliert, die von der Fahrbahn hervorgerufen und über Rad und Stoßdämpfer weitergeleitet werden, sowie Schwingungen, die vom Stoßdämpfer hervorgerufen werden. Die Ankopplung wird so gestaltet, dass kardanische Bewegungen des Stoßdämpfers ermöglicht werden und die Anforderungen an Kraft-Weg-Kennungen in axialer, radialer und kardanischer Richtung erfüllt werden. Axiale sowie radiale Kennungen beeinflussen in Abhängigkeit von der Fahrwerkskonzeption wesentlich das Fahrverhalten und müssen exakt abgestimmt werden. Das Zusammenspiel aus Stoßdämpfer und Dämpferlager beeinflusst entscheidend den Fahrkomfort, die Fahrsicherheit, die Wank- bzw. Nickabstützung sowie die Reduktion von Effekten des Radstuckerns und Karosseriezitterns.

Es sind unterschiedliche Arten von Dämpferlagern bekannt, sowohl im Hinblick auf eingesetzte Materialien als auch im Hinblick auf Herstellverfahren. Weit verbreitet sind Dämpferlager auf Basis von Aluminium-Druckguss, in die ein elastomeres Dämpfungselement eingelegt ist. Zur Herstellung wird meist das Dämpfungselement in ein hohlzylindrisches Gehäuse eingelegt und anschließend das Gehäuse mit einem Deckel verschlossen. Üblicherweise weist das Gehäuse einen Kragen auf, in dessen Innendurchmesser der Deckel hineingedrückt wird. Dabei ist der Kragen des Gehäuses höher als der Deckel. Der überstehende Bereich des Kragens wird nach dem Aufdrücken des Deckels durch Verrollen bzw. Bördeln umgelegt. Hierdurch wird der Deckel fest in seiner Position fixiert. Nachteilig an diesem bekannten Verfahren ist, dass durch das Verrollen der Kante des Gehäuses die Kräfte, die im Fahrbetrieb auftreten können, begrenzt sind. Die Festigkeit des Lagers ist also durch die Festigkeit des verrollten Randes limitiert. Zudem kann ein "Aufrollen" des Randes im Dauerbetrieb die Haltbarkeit des Lagers einschränken.

Als Alternative zur Befestigung des Deckels durch Verrollen oder Bördeln sind Dämpferlager bekannt, bei denen der Deckel mit dem Gehäuse anderweitig formschlüssig verbunden ist, beispielsweise in Form eines Bajonettverschlusses oder durch Verschrauben. Als weitere Alternative sind stoffschlüssige Verbindungen bekannt, zum Beispiel durch Verschweißen des Deckels mit dem Gehäuse. So beschreibt die Offenlegungsschrift DE 10 2007 003 207 A1 beispielsweise ein Dämpferlager mit einem Gehäuse, einem Lagerelement und einem Deckel, wobei das Lagerelement durch den Deckel in dem Gehäuse fixiert ist. Das Verschweißen des Deckels mit dem Gehäuse erfolgt üblicherweise mittels Laserstrahlschweißens. Auch die DE 103 35 956, DE 10 2007 003 207 A1, DE 102012 001 299 A1 und die DE 4321 874 A1 nennen verschiedene Schweißtechniken für die Verbindungen von Elementen einer Federkonstruktion.

Häufig besteht die Anforderung, das Dämpfungselement vorkomprimiert in dem Dämpferlager anzuordnen, um bestimmte Dämpfungseigenschaften zu gewährleisten. Obwohl mit sämtlichen bekannten Verfahren eine Vorkompression des Dämpfungselements grundsätzlich möglich ist, ist - unter anderem aufgrund von Fertigungstoleranzen und verfahrensbedingten Einschränkungen - eine definierte Einstellung der Vorkompression nach wie vor schwierig und kaum exakt und reproduzierbar zu erreichen.

Es stellte sich die Aufgabe, Dämpferlager bereitzustellen, bei denen eine definierte Vorkompression des Dämpfungselements einstellbar ist und die dennoch einfach zu fertigen und kostengünstig in der Herstellung sind.

Diese Aufgabe wurde gelöst durch erfindungsgemäße Dämpferlager, wie sie in Anspruch 1 angegeben sind. Die abhängigen Ansprüche 2 bis 7 sind auf weitere vorteilhafte Ausbildungen der Erfindung gerichtet. Weiterhin wird diese Aufgabe gelöst durch ein Verfahren, wie es in den Ansprüchen 8 bis 10 angegeben ist.

Erfindungsgemäße Dämpferlager umfassen ein hohles Gehäuse zur Aufnahme eines Dämpfungselements sowie einen Deckel, der geeignet ist, das Dämpfungselement in dem Gehäuse zu fixieren. Gehäuse und Deckel sind aus Kunststoff gefertigt. Erfindungsgemäß ist die Verbindung zwischen Gehäuse und Deckel stoffschlüssig durch einen Schweißprozess hergestellt, der auf einer Relativbewegung zwischen Gehäuse und Deckel beruht, wobei das Orbitalschweißen angewendet wird.

Die Verschweißung von Gehäuse und Deckel erfolgt an dafür vorgesehenen Berührungsflächen. In einer bevorzugten Ausgestaltung der Erfindung sind die zur stoffschlüssigen Verbindung vorgesehenen Berührungsflächen des Gehäuses und des Deckels rotationssymmetrisch gestaltet. Die Rotationssymmetrie legt eine Rotationsachse fest. Im Folgenden werden die Begriffe "radial" und "axial" in Bezug auf diese Rotationsachse verwendet.

Vorzugsweise sind die Berührungsflächen des Gehäuses und des Deckels bezüglich der Rotationsachse in radialer Richtung von der äußeren Oberfläche des Dämpfungselements beabstandet. Dadurch wird gewährleistet, dass die beim Verschweißen entstehende Kunststoffmasse der Schweißnaht nicht unmittelbar mit dem Dämpfungselement in Berührung kommt, was die Dämpfungseigenschaften negativ beeinflussen könnte. In einer Fortbildung dieser bevorzugten Ausgestaltung sind die Berührungsflächen zudem durch ein Trennelement von der äußeren Oberfläche des Dämpfungselements getrennt. Dabei kann das Trennelement den Abstand zwischen Dämpfungselement und Berührungsfläche vollständig oder teilweise ausfüllen.

Besonders bevorzugt ist das Trennelement als Nut oder Steg ausgebildet, insbesondere als ringförmige Nut oder ringförmiger Steg. Die Nut oder der Steg können durchgehend oder unterbrochen ausgebildet sein. In dieser Hinsicht ist der Begriff "ringförmig" nicht einschränkend zu verstehen. Auch der Begriff "Trennelement" in der Einzahl verwendet ist diesbezüglich nicht einschränkend zu lesen. Bei dieser Ausgestaltung ist die radiale und axiale Ausdehnung der Nut oder des Steges vorzugsweise so bemessen, dass die beim Verschweißen entstehende Kunststoffmasse der Schweißnaht zumindest teilweise, insbesondere aber vollständig in dem durch Berührungsflächen und Nut oder Steg festgelegten Volumen aufgenommen werden kann.

Das Trennelement ist vorzugsweise integral mit dem Gehäuse und/oder dem Deckel verbunden. Es kann beispielsweise Bestandteil der Spritzgussform sein, mit der Gehäuse bzw. Deckel hergestellt werden.

In einer weiterhin bevorzugten Variante des erfindungsgemäßen Dämpferlagers sind die Berührungsflächen des Gehäuses und des Deckels konisch geformt. Auch bei dieser Variante kann ein Abstand und/oder ein Trennelement wie oben beschrieben vorgesehen sein.

Das Gehäuse und der Deckel können aus demselben oder aus unterschiedlichen Kunststoffen gefertigt sein. Voraussetzung ist lediglich, dass die jeweiligen Berührungsflächen aufgrund einer Relativbewegung eine stoffschlüssige Verbindung eingehen können, was beispielsweise bei Thermoplasten der Fall ist. Im Hinblick auf Materialeigenschaften wie Festigkeit und Steifigkeit sind faserverstärkte Kunststoffmaterialien bevorzugt. Besonders bevorzugt sind Gehäuse und Deckel auf Basis derselben Kunststoffmatrix hergestellt, wobei der Faseranteil im Gehäuse und im Deckel gleich oder unterschiedlich sein kann.

In einer vorteilhaften Ausgestaltung ist das Gehäuse und der Deckel auf der Basis von faserverstärktem Polyamid mit einem Faseranteil von mehr als 20%, bevorzugt mehr als 30%, besonders bevorzugt mehr als 40% gefertigt. Der Faseranteil ist volumenbezogen zu verstehen.

Das erfindungsgemäße Dämpferlager ist geeignet, mindestens ein Dämpfungselement in seinem Gehäuse aufzunehmen, das mit dem Deckel in dem Gehäuse fixiert werden kann. Das Dämpfungselement kann einteilig oder mehrteilig sein und auf bekannten Materialien wie Gummi oder Polyisocyanat-Polyadditionsprodukten basieren.

In einer bevorzugten Ausführungsform basiert das Dämpfungselement auf Elastomeren auf der Basis von zelligen Polyisocyanat-Polyadditionsprodukten, besonders bevorzugt auf der Basis von zelligen Polyurethanelastomeren, die Polyharnstoffstrukturen enthalten können. Zellig bedeutet, dass die Zellen bevorzugt einen Durchmesser von 0,01 mm bis 0,5 mm, besonders bevorzugt von 0,01 mm bis 0,15 mm aufweisen.

Besonders bevorzugt haben die Polyisocyanat-Polyadditionsprodukte mindestens eine der folgenden Materialeigenschaften: eine Dichte nach DIN EN ISO 845 zwischen 270 und 900 kg/m3, eine Zugfestigkeit nach DIN EN ISO 1798 von ≥ 2,0 N/mm2, eine Bruchdehnung nach DIN EN ISO 1798 von ≥ 200 % oder eine Weiterreißfestigkeit nach DIN ISO 34-1 B (b) von ≥ 8 N/mm. In weiter bevorzugten Ausführungsformen besitzt ein Polyisocyanat-Polyadditionsprodukt zwei, weiter bevorzugt drei dieser Materialeigenschaften, besonders bevorzugte Ausführungsformen besitzen alle vier der genannten Materialeigenschaften.

Elastomere auf der Basis von Polyisocyanat-Polyadditionsprodukten und ihre Herstellung sind allgemein bekannt und vielfältig beschreiben, beispielsweise in EP 62 835 A1, EP 36 994 A2, EP 250 969 A1, EP 1 171 515 A1, DE 195 48 770 A1 und DE 195 48 771 A1.

In einer bevorzugten Ausführungsform der Erfindung ist das Gehäuse derart gestaltet, dass nach der Verschweißung mit dem Deckel die axiale Ausdehnung des Hohlraums des Gehäuses von 50 % bis 95 % der Höhe des Dämpfungselements beträgt, sodass das Dämpfungselement vorkomprimiert ist. Die Vorkompression wird vorzugsweise umso größer gewählt, je stärker das Dämpfungselement beim Einsatz im Fahrzeug in axialer Richtung belastet und damit bewegt wird. Dadurch wird gewährleistet, dass auch bei großer Belastung das Dämpfungselement in Kontakt mit der Innenseite des Gehäuses und/oder des Deckels bleibt.

In einer weiteren bevorzugten Ausführungsform umfasst das Dämpfungselement einen Einleger, der geeignet ist, eine Kolbenstange eines Stoßdämpfers daran zu befestigen. Der Einleger ist vorteilhaft aus Metall, beispielsweise Stahl oder Aluminium gefertigt. Er kann auch aus einem harten Kunststoff gefertigt sein, beispielsweise einem faserverstärkten Polyamid.

Das erfindungsgemäße Dämpferlager wird vorteilhaft als Axiallager innerhalb des Fahrwerks eines Kraftfahrzeugs eingesetzt. In diesem Fall ist an dem Einleger vorzugsweise die Kolbenstange eines Stoßdämpfers befestigt.

Ein weiterer Gegenstand der Erfindung ist ein Verfahren zur Herstellung eines Dämpferlagers, das ein hohles Gehäuse zur Aufnahme eines Dämpfungselements sowie einen Deckel zur Fixierung des Dämpfungselements in dem Gehäuse umfasst, wobei das Gehäuse und der Deckel aus Kunststoff gefertigt sind. Bei dem erfindungsgemäßen Verfahren werden zunächst Gehäuse und Deckel an dazu vorgesehenen Berührungsflächen in Kontakt gebracht. Anschließend wird eine Relativbewegung zwischen Gehäuse und Deckel erzeugt, die aufgrund des Energieeintrages in die Berührungsflächen dazu führt, dass Gehäuse und Deckel stoffschlüssig verschweißen, wobei das Orbitalschweißen angewendet wird.

In Abhängigkeit der Bauteilgeometrie, insbesondere der in Kontakt zu bringenden Berührungsflächen, sind unterschiedliche Schweißverfahren anwendbar, insbesondere Reibschweißverfahren. Während bei ebenen Berührungsflächen auch ein lineares Reibschweißen in Betracht kommt, sind bei rotationssymmetrischen Berührungsflächen beispielsweise Verfahren des rotativen Reibschweißens oder rotativ oszillierenden Reibschweißens anwendbar. Erfindungsgemäß ist jedoch Orbitalschweißen vorgesehen.

In einer anderen bevorzugten Form wird das oszillierende Reibschweißen, bevorzugt das linear oszillierende Reibschweißen, oder erfindungsgemäß das Orbitalschweißen angewendet. Dabei haben diese Schweißverfahren den Vorteil auch bei nicht rotationssymmetrischen Geometrien der zu verschweißenden Flächen angewendet werden zu können.

Bevorzugt ist ein Orbitalschweißen, wie es in der ISO 15620 ausgeführt wird. Je nach Ausführung der Bauteile wird entweder das Single Orbitalschweißen angewendet, bei dem nur ein Bauteil schwingt, oder es wird das Multi-Orbitalreibschweißen angewendet, bei dem beide zu verschweißende Bauteile schwingen. Das Orbitalschweißen hat den Vorteil, dass die zu verbindenden Bauteile nicht rotationssymmetrisch sein müssen. Bei dem Orbitalschweißen bewegen sich die Achsen der zu verschweißenden Fläche in derselben Ebene.

Besonders bevorzugt wird bei rotationssymmetrischen Berührungsflächen das Orbitalschweißen angewendet.

Es wird das oben beschriebene Orbitalschweißen angewendet. Diese hat insbesondere bei faserverstärkten Bauteilen den Vorteil, dass die Fasern einen geringeren Faserorientierungsgrad aufweisen, wodurch es zu einer besseren Verschweißung kommt.

Da üblicherweise das Dämpfungselement vorgespannt werden soll, findet während des Verschweißens auch ein Kontakt zwischen Deckel und Dämpfungselement statt. Um die Wahrscheinlichkeit einer möglichen thermischen oder mechanischen Schädigung des Dämpfungselements während des Verschweißens zu verringern, sind Schweißverfahren besonders bevorzugt, die nur eine geringe Einwirkung auf das Dämpfungselement verursachen, beispielsweise das Orbitalschweißen.

Dabei wird die Relativbewegung der zu verschweißenden Bauteile so eingestellt, dass diese zwar miteinander verschweißen, das Dämpfungselement aber auf Grund seiner Elastizität nur so geringe Bewegungen erfährt, dass sich das thermoplastische Bauteil nur so gering erwärmt, dass es nicht zu einer Vebindung kommt. Dabei wird die thermische und mechanische Schädigung des Dämpfungselements reduziert, idealerweise vollständig unterbunden.

In einer bevorzugten Ausgestaltung des erfindungsgemäßen Verfahrens wird während der Relativbewegung die Eindringtiefe des Deckels in den Hohlraum des Gehäuses messtechnisch erfasst. Bei einer Schweißvorrichtung, die das Gehäuse und den Deckel in separaten Werkzeugen hält, um die Relativbewegung durchzuführen, kann die messtechnische Erfassung beispielsweise dadurch erfolgen, dass eine Änderung des Abstands der Werkzeuge zueinander (Wegänderung) oder eine Änderung der aufzuwendenden Kräfte erfasst wird.

Besonders bevorzugt wird die messtechnisch bestimmte Veränderung verwendet, um eine vorgegebene Kompression des Dämpfungselements einzustellen. Dies kann beispielsweise dadurch realisiert werden, dass die Änderung des Abstands zweier Werkzeuge zueinander erfasst wird und die während der Relativbewegung aufzubringenden Anpresskräfte der Werkzeuge derart angepasst werden, dass am Ende des Schweißprozesses eine vorbestimmte Eindringtiefe des Deckels in den Hohlraum des Gehäuses erreicht ist. Für die software- und/oder hardwaretechnische Umsetzung kann auf bekannte Verfahren zurückgegriffen werden.

Gegenüber Dämpferlagern, wie sie aus dem Stand der Technik bekannt sind, weisen erfindungsgemäße Dämpferlager insbesondere den Vorteil auf, dass aufgrund der variablen Einschweißtiefe des Deckels die Vorkompression des Dämpfungselements auf einen definierten Wert eingestellt werden kann. Darüber hinaus gewährleisten die gewählten Verfahren auch bei höheren Vorspannung, dass es zu keiner Verbindung zwischen dem Dämpfungselement und den Anbauteilen kommt. Das erfindungsgemäße Verfahren eignet sich auch zur Serienfertigung, sodass eine einfache und kostengünstige Herstellung der Dämpferlager in reproduzierbar hoher Qualität möglich ist.

### Beispiel 1

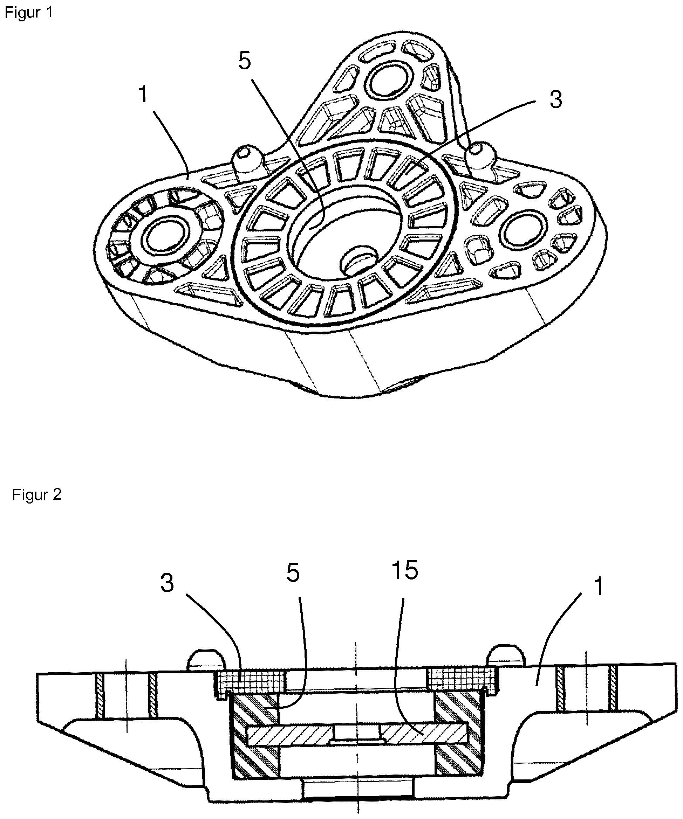

In Fig. 1 ist ein erfindungsgemäßes Dämpferlager in einer Draufsicht im fertig montierten Zustand dargestellt. Das Dämpferlager umfasst ein Gehäuse 1, das dazu vorgesehen ist, über drei Flansche mit Durchgangsbohrungen an der Karosserie eines Kraftfahrzeugs montiert zu werden. Im Zentrum des Gehäuses 1 befindet sich ein Hohlraum, in dem ein Dämpfungselement 5 aufgenommen ist. Das Dämpfungselement 5 ist mit einem Deckel 3 in dem Hohlraum des Gehäuses fixiert. In dem dargestellten Beispiel schließt die Oberseite des Deckels bündig mit der Oberseite des Gehäuses ab. Diese Ausführung ist jedoch nicht zwingend. In Abhängigkeit von den Vorgaben bezüglich des Bauraums, in den das Dämpferlager eingebaut werden soll, kann die Oberseite des Deckels auch über das Gehäuse hinausragen oder vertieft in den Hohlraum eingebracht sein.

Das Gehäuse 1 und der Deckel 3 sind aus Kunststoff gefertigt, in dem dargestellten Beispiel aus Polyamid (PA 6.6) mit einem volumenbezogenen Glasfaseranteil von 50%. Die Verbindung zwischen Gehäuse und Deckel ist stoffschlüssig durch einen Schweißprozess hergestellt, der auf einer Relativbewegung zwischen Gehäuse und Deckel beruht.

Fig. 2 zeigt einen Längsschnitt durch das Dämpferlager gemäß Fig. 1. Das Dämpfungselement 5 ist zwischen dem Gehäuseboden und dem Deckel 3 eingespannt. In dem dargestellten Beispiel ist das Dämpfungselement 5 als Hohlzylinder ausgestaltet, der in axialer Richtung mittig eine Ringnut aufweist, in der ein Einleger 15 angeordnet ist. Dieser Einleger 15 dient dazu, die Kolbenstange eines Stoßdämpfers daran zu befestigen.

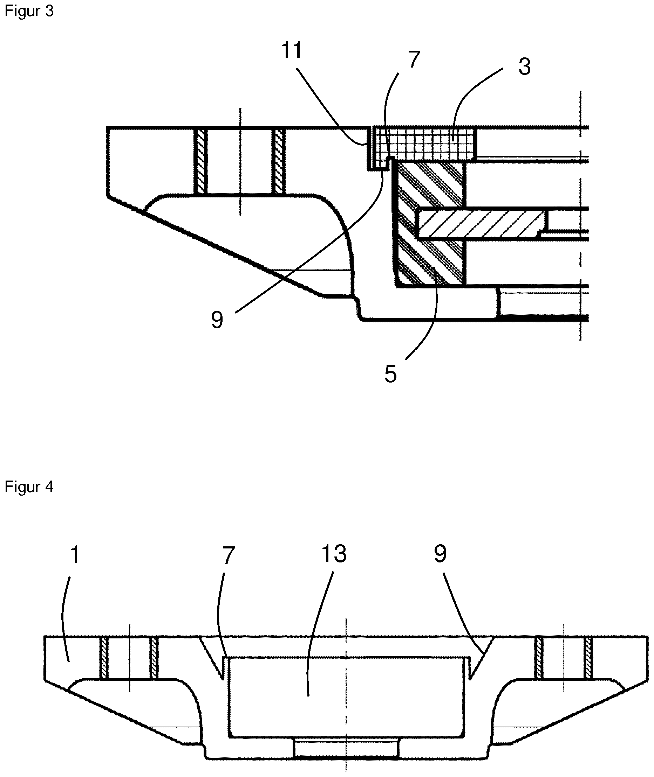

Fig. 3 zeigt einen vergrößerten Ausschnitt aus der Darstellung der Fig. 2. In diesem Beispiel ist der Außendurchmesser des Deckels 3 geringer als der Innendurchmesser des Gehäuses 1 in dem zur Aufnahme des Deckels 3 vorgesehenen Bereich. Im montierten Zustand ergibt sich somit zwischen dem Deckel 3 und dem Gehäuse 1 ein ringförmiger Spalt 11. Der Deckel 3 weist auf seiner Unterseite, die dem Dämpfungselement 5 zugewandt ist, eine ringförmige Nut auf.

Der Bereich des Deckels zwischen der Nut und seinem äußeren Rand hat eine größere Dicke als der innere Bereich des Deckels. Somit ragt der Rand des Deckels in axialer Richtung nach unten über den inneren Bereich des Deckels hinaus. Die untere Ringfläche dieses Randes stellt die deckelseitige Berührungsfläche dar, die zum Verschweißen mit dem Gehäuse vorgesehen ist.

Das Gehäuse 1 weist in radialer Richtung vom Hohlraum, in dem das Dämpfungselement 5 angeordnet ist, ausgehend nach außen zunächst einen ringförmigen Steg 7 auf, dem eine ringförmige Nut folgt. Der Boden dieser Nut stellt die gehäuseseitige Berührungsfläche 9 dar, die zum Verschweißen mit dem Deckel vorgesehen ist.

Die Fig. 1 bis 3 zeigen das Dämpferlager im montierten Zustand. Zur Herstellung der Schweißverbindung wurden Gehäuse 1 und Deckel 3 an den genannten Berührungsflächen in Kontakt gebracht und anschließend eine Relativbewegung zwischen Gehäuse und Deckel erzeugt. Die Relativbewegung bewirkt einen Energieeintrag in Form von Reibung in die Berührungsflächen, der dazu führt, dass das Kunststoffmaterial an den Berührungsflächen schmilzt und stoffschlüssig verschweißt. Das durch das Aufschmelzen entstehende Kunststoffmaterial verbleibt aufgrund der Formgebung von Deckel und Gehäuse im Bereich der Nut im Gehäuse und wird durch den Steg 7, der als Trennelement fungiert, daran gehindert, mit dem Dämpfungselement 5 in Kontakt zu treten. Dadurch wird eine Beeinträchtigung des Dämpfungselements 5 durch den Schweißprozess minimiert und bestenfalls vollständig vermieden.

Während des Schweißprozesses wird der Deckel 3 in Richtung des Gehäusebodens gedrückt. Dabei wird messtechnisch erfasst, wie weit der Deckel in den Hohlraum des Gehäuses eindringt. Der Schweißprozess wird solange fortgesetzt, bis eine vorab festgelegte Vorkompression des Dämpfungselements 5 erreicht ist.

### Beispiel 2

In Fig. 4 ist ein Längsschnitt durch ein Gehäuse 1 eines weiteren Beispiels eines erfindungsgemäßen Dämpferlagers dargestellt. Von dem Dämpferlager gemäß Beispiel 1 unterscheidet sich dieses Dämpferlager im Wesentlichen durch die Formgebung der zur Verschweißung vorgesehenen Berührungsflächen 9. Die Berührungsflächen von Gehäuse und Deckel, der in Fig. 4 nicht dargestellt ist, sind konisch geformt. Wie bei Beispiel 1 ist die Berührungsfläche 9 des Gehäuses durch einen ringförmigen Steg 7 von dem zur Aufnahme des Dämpfungselements vorgesehenen Hohlraum 13 des Gehäuses getrennt.

Zum Verschweißen werden Gehäuse und Deckel an den Berührungsflächen in Kontakt gebracht und anschließend eine Relativbewegung zwischen Gehäuse und Deckel erzeugt. Das Kunststoffmaterial an den konischen Berührungsflächen schmilzt aufgrund des Energieeintrages und verbindet sich stoffschlüssig. Im Vergleich zu Beispiel 1 ist die zum Verschmelzen vorgesehene Fläche aufgrund der konischen Gestaltung größer. Ebenso wie in Beispiel 1 wird das Dämpfungselement vor dem aufschmelzenden Material geschützt, da dieses in der Ringnut verbleibt, die zwischen dem Steg 7 und den Berührungsflächen gebildet wird.

## Patentansprüche

1. Dämpferlager umfassend ein hohles Gehäuse (1) zur Aufnahme eines Dämpfungselements (5) sowie einen Deckel (3) zur Fixierung des Dämpfungselements (5) in dem Gehäuse (1), wobei das Gehäuse (1) und der Deckel (3) aus Kunststoff gefertigt sind, **dadurch gekennzeichnet, dass** die Verbindung zwischen Gehäuse (1) und Deckel (3) stoffschlüssig durch einen Schweißprozess hergestellt ist, der auf einer Relativbewegung zwischen Gehäuse (1) und Deckel (3) beruht, wobei das Orbitalschweißen angewendet wird.

2. Dämpferlager nach Anspruch 1, wobei die zur stoffschlüssigen Verbindung vorgesehenen Berührungsflächen des Gehäuses (1) und des Deckels (3) rotationssymmetrisch gestaltet sind.

3. Dämpferlager einem der vorhergehenden Ansprüche, wobei die Berührungsflächen des Gehäuses (1) und des Deckels (3) bezüglich der Rotationsachse in radialer Richtung von der äußeren Oberfläche des Dämpfungselements (5) beabstandet und durch ein Trennelement (7) getrennt sind.

4. Dämpferlager nach Anspruch 3, wobei das Trennelement (7) als Nut oder Steg ausgebildet ist.

5. Dämpferlager nach einem der vorhergehenden Ansprüche, wobei die Berührungsflächen des Gehäuses (1) und des Deckels (3) konisch geformt sind.

6. Dämpferlager nach einem der vorhergehenden Ansprüche, wobei das Gehäuse (1) und der Deckel (3) auf der Basis von faserverstärktem Polyamid mit einem Faseranteil von mehr als 20%, bevorzugt mehr als 30%, besonders bevorzugt mehr als 40% gefertigt sind.

7. Dämpferlager nach einem der vorhergehenden Ansprüche, wobei das Dämpfungselement auf einem zelligen Polyisocyanat-Polyadditionsprodukt basiert.

8. Verfahren zur Herstellung eines Dämpferlagers, das ein hohles Gehäuse (1) zur Aufnahme eines Dämpfungselements (5) sowie einen Deckel (3) zur Fixierung des Dämpfungselements (5) in dem Gehäuse (1) umfasst, wobei das Gehäuse (1) und der Deckel (3) aus Kunststoff gefertigt sind, **dadurch gekennzeichnet, dass** Gehäuse und Deckel an dazu vorgesehenen Berührungsflächen in Kontakt gebracht werden, und anschließend eine Relativbewegung zwischen Gehäuse und Deckel erzeugt wird, die aufgrund des Energieeintrages in die Berührungsflächen dazu führt, dass Gehäuse und Deckel stoffschlüssig verschweißen, wobei das Orbitalschweißen angewendet wird.

9. Verfahren nach Anspruch 8, wobei während der Relativbewegung die Eindringtiefe des Deckels (3) in den Hohlraum des Gehäuses (1) messtechnisch erfasst wird.

10. Verfahren nach Anspruch 9, wobei die messtechnisch bestimmte Veränderung verwendet wird, um eine vorgegebene Kompression des Dämpfungselements (5) einzustellen.

## Claims

1. A damper bearing comprising a hollow housing (1) for receiving a damping element (5) and a cover (3) for fixing the damping element (5) in the housing (1), wherein the housing (1) and the cover (3) are manufactured from plastic, wherein the connection between the housing (1) and the cover (3) is produced integrally by a welding process, which is based on a relative movement between the housing (1) and the cover (3), wherein orbital welding is used.

2. The damper bearing according to claim 1, wherein the contact surfaces of the housing (1) and of the cover (3) which are provided for the integral connection are of rotationally symmetrical design.

3. The damper bearing according to either of the preceding claims, wherein the contact surfaces of the housing (1) and of the cover (3) are spaced apart from the outer surface of the damping element (5) in a radial direction relative to the axis of rotation and are separated by a separating element (7).

4. The damper bearing according to claim 3, wherein the separating element (7) is designed as a groove or web.

5. The damper bearing according to one of the preceding claims, wherein the contact surfaces of the housing (1) and of the cover (3) are conically shaped.

6. The damper bearing according to one of the preceding claims, wherein the housing (1) and the cover (3) are manufactured on the basis of fiber-reinforced polyamide with a fiber content of more than 20%, preferably more than 30%, particularly preferably more than 40%.

7. The damper bearing according to one of the preceding claims, wherein the damping element is based on a cellular polyisocyanate polyaddition product.

8. A method for producing a damper bearing, which comprises a hollow housing (1) for receiving a damping element (5) and a cover (3) for fixing the damping element (5) in the housing (1), wherein the housing (1) and the cover (3) are manufactured from plastic, wherein the housing and the cover are brought into contact at contact surfaces provided for this purpose, and a relative movement between the housing and the cover is then generated, which causes the housing and the cover to be integrally welded as a result of the energy input into the contact surfaces, wherein orbital welding is used.

9. The method according to claim 8, wherein the penetration depth of the cover (3) into the cavity of the housing (1) is detected metrologically during the relative movement.

10. The method according to claim 9, wherein the metrologically determined change is used to set a specified compression of the damping element (5).

## Revendications

1. Palier amortisseur comprenant un boîtier creux (1) pour la réception d'un élément amortisseur (5), ainsi qu'un couvercle (3) pour la fixation de l'élément amortisseur (5) dans le boîtier (1), le boîtier (1) et le couvercle (3) étant fabriqués en matière plastique, **caractérisé en ce que** la liaison entre le boîtier (1) et le couvercle (3) est réalisée par accouplement de matières par un processus de soudage, qui repose sur un mouvement relatif entre le boîtier (1) et le couvercle (3), le soudage orbital étant utilisé.

2. Palier amortisseur selon la revendication 1, dans lequel les surfaces de contact prévues pour la liaison par accouplement de matières du boîtier (1) et du couvercle (3) sont configurées sous forme symétrique par rotation.

3. Palier amortisseur selon l'une quelconque des revendications précédentes, dans lequel les surfaces de contact du boîtier (1) et du couvercle (3) sont espacées de la surface extérieure de l'élément amortisseur (5) dans la direction radiale par rapport à l'axe de rotation, et sont séparées par un élément de séparation (7).

4. Palier amortisseur selon la revendication 3, dans lequel l'élément de séparation (7) est configuré sous la forme d'une rainure ou d'une traverse.

5. Palier amortisseur selon l'une quelconque des revendications précédentes, dans lequel les surfaces de contact du boîtier (1) et du couvercle (3) sont de forme conique.

6. Palier amortisseur selon l'une quelconque des revendications précédentes, dans lequel le boîtier (1) et le couvercle (3) sont fabriqués à base de polyamide renforcé par des fibres ayant une proportion de fibres de plus de 20 %, de préférence de plus de 30 %, de manière particulièrement préférée de plus de 40 %.

7. Palier amortisseur selon l'une quelconque des revendications précédentes, dans lequel l'élément amortisseur est à base d'un produit de polyaddition de polyisocyanate cellulaire.

8. Procédé de fabrication d'un palier amortisseur, qui comprend un boîtier creux (1) pour la réception d'un élément amortisseur (5), ainsi qu'un couvercle (3) pour la fixation de l'élément amortisseur (5) dans le boîtier (1), le boîtier (1) et le couvercle (3) étant fabriqués en matière plastique, **caractérisé en ce que** le boîtier et le couvercle sont mis en contact au niveau de surfaces de contact prévues pour cela, puis un mouvement relatif entre le boîtier et le couvercle est généré, qui conduit en raison de l'apport d'énergie dans les surfaces de contact à ce que le boîtier et le couvercle se soudent par accouplement de matières, le soudage orbital étant utilisé.

9. Procédé selon la revendication 8, dans lequel la profondeur de pénétration du couvercle (3) dans la cavité du boîtier (1) pendant le mouvement relatif est déterminée par mesure.

10. Procédé selon la revendication 9, dans lequel la modification déterminée par mesure est utilisée pour ajuster une compression prédéterminée de l'élément amortisseur (5).
